# EUROPEAN PATENT SPECIFICATION

(11) **EP 0 668 030 B1**
(45) Date of publication and mention of the grant of the patent: **02.05.1997**
(21) Application number: 95101551.0
(22) Date of filing: 06.02.1995
(51) Int. Cl.: A42C 2/00, A42B 3/06, B29C 51/16, B29C 51/36

(54) **Apparatus and process for decorating helmets by covering them with a sheet of pre-decorated synthetic material**
Vorrichtung und Verfahren zum Verzieren von Helmen durch Bedecken dieser mit einer Folie aus vorverziertem synthetischem Material
Appareil et procédé pour décorer des casques en les recouvrant d'une feuille en matière synthétique prédécorée

(30) Priority: 17.02.1994 IT MI940286
(43) Date of publication of application: 23.08.1995
(73) Proprietor: AGV S.p.A., I-15048 Valenza (Alessandria) (IT); WINTUNE GRAPHICS, INC., Sacramento, CA 95838 (US)
(72) Inventor: Binda, Enzo, I-21038 Sangiano, (Varese) (IT); Carpenter, Waylin, Sacramento, CA 95814 (US)
(74) Representative: Modiano, Guido, Dr.-Ing.

(56) References cited:
- EP-A- 0 251 546
- WO-A-91/06420
- WO-A-93/21014
- FR-A- 1 253 552
- GB-A- 2 103 468
- US-A- 4 615 438

## Description

The present invention relates to an apparatus and a process for decorating helmets by covering them with a sheet of pre-decorated synthetic material.

As is known, one of the most popular methods for decorating sports helmets, such as for example motorcycle helmets or helmets for practicing sports in general, consists in directly decorating the outer surface of the dome of the helmet, which is generally made of a composite or thermoplastic material, by painting it or by applying self-adhesive decorations.

Decorations produced with this method have the drawback of a short lifetime, since the paint or self-adhesive decorations can be removed very easily upon impacts that may normally occur during use of the helmet.

On the other hand, decorations are a decisive factor in the aesthetics of the helmet, and there is a demand for increasingly sophisticated, complicated and customized decorations.

In order to solve the problem of obtaining a helmet decoration that can withstand accidental impacts or friction, a method has been devised which is disclosed in international patent WO 93/21014 and essentially consists in decorating a helmet by covering it with a sheet of synthetic material which is pre-decorated on the side which adheres to the outer surface of the dome of the helmet.

More particularly, the process described in the above mentioned patent substantially consists in producing, by silk-screen printing or other known methods, a decoration on one side of a sheet made of thermoplastic transparent or translucent material, and in heating said sheet while it is supported by an appropriate frame so that its decorated side faces the helmet to be covered, which is placed on a flat supporting fixture. By moving the supporting fixture, the helmet is moved so that its top is in contact against the pre-decorated sheet so as to partially stretch the sheet, and the space enclosed between the pre-decorated sheet and the flat fixture is connected to a vacuum source so as to produce the thermoforming of the pre-decorated sheet on the helmet, thus perfectly covering the outer surface of the helmet by means of the pre-decorated sheet. In this manner the decoration is sealed between the sheet of thermoformed synthetic material and the helmet and is thus protected against scratches or accidental impacts for a practically unlimited time.

Although the above described method has yielded good results in decorating helmets having a rather simple shape, particularly in the case of helmets which do not have a considerable reduction in diameter proximate to their base, it has been found to be susceptible of improvements.

Indeed, in helmets having a significant reduction in diameter from an intermediate region of their vertical extension toward their base, wrinkles can form proximate to the base of the helmet during the thermoforming of the sheet of synthetic material on said helmet. These wrinkles are an unacceptable defect both in terms of the aesthetics of the helmet and in terms of the finish of its outer surfaces, which has always been the subject of great attention to avoid unpleasant noises and to avoid uselessly penalizing the aerodynamics of the helmet.

The aim of the present invention is to solve the problem described above by providing an apparatus that allows to decorate helmets by covering them with a sheet of pre-decorated synthetic material without problems as regards the uniformity of the outer surface of the finished helmet even in the case of helmets having a significant reduction in diameter proximate to their base.

Within the scope of this aim, an object of the present invention is to provide an apparatus that allows to obtain, in helmet decoration, a result which is superior, in terms of quality, to the one obtainable with conventional decoration methods.

Another object of the invention is to provide an apparatus that allows to achieve an excellent finishing of the helmet even at its lower edges and at the edges of any openings formed in the helmet body.

Another object of the invention is to provide a process for decorating helmets by direct thermoforming of a sheet of pre-decorated synthetic material.

With this aim in view, as well as these and other objects which will become apparent hereinafter, there are provided, according to the present invention, an apparatus and a process for decorating helmets as defined in the appended claims.

Further characteristics and advantages of the apparatus according to the present invention will become apparent from the following detailed description of a preferred but not exclusive embodiment thereof, illustrated only by way of non-limitative example in the accompanying drawings, wherein:

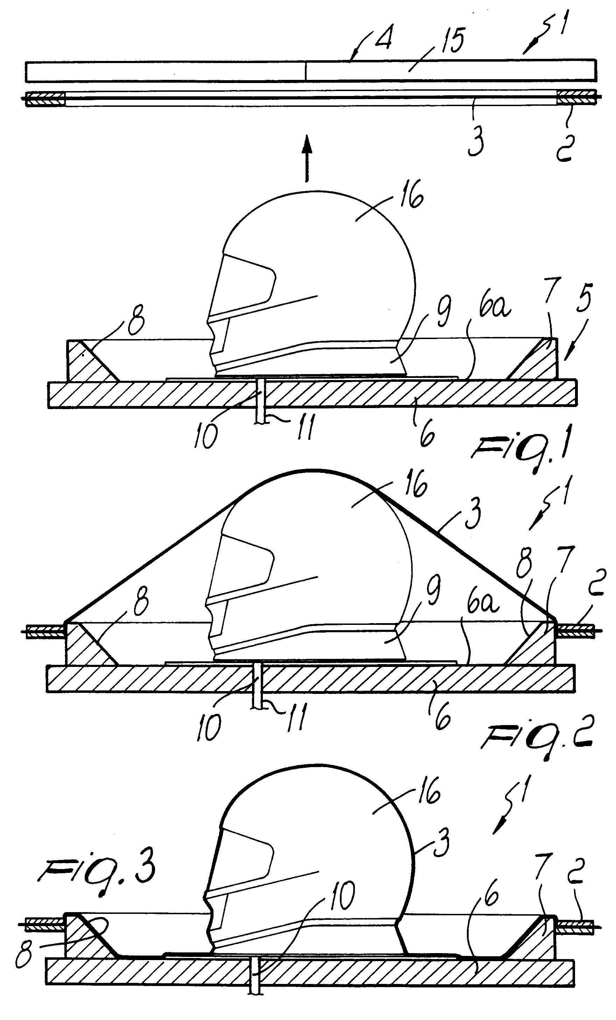

figures 1 to 3 are schematic and partially sectional views of the apparatus according to the invention during the execution of the process for decorating a helmet by direct thermoforming of a pre-decorated sheet;
figure 4 is a sectional view of the supporting element, taken along a vertical plane, with a helmet arranged on it;

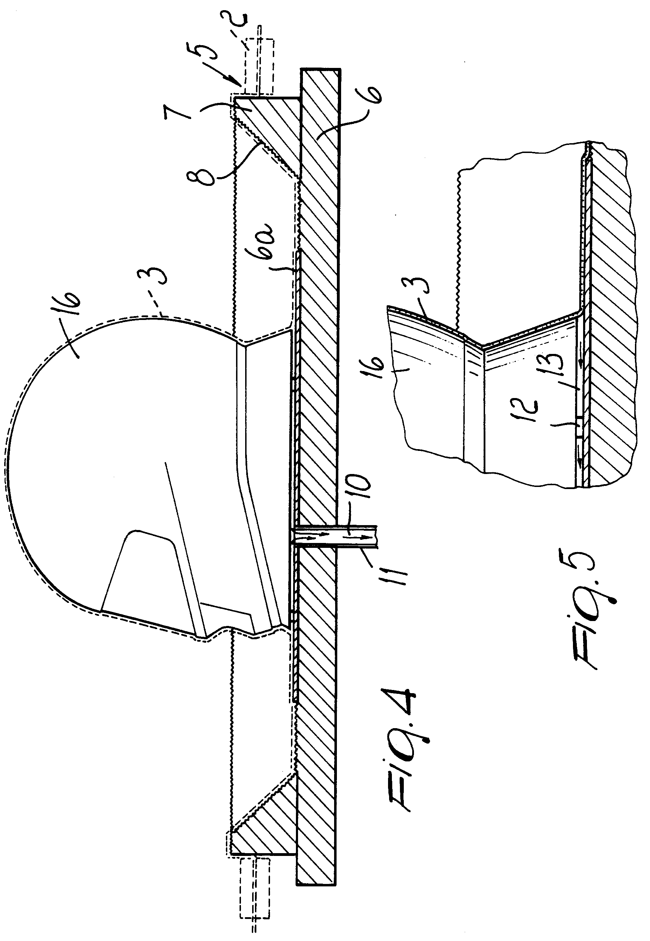

figure 5 is an enlarged-scale view of a detail of figure 4 at the end of the thermoforming of the pre-decorated sheet on the helmet;

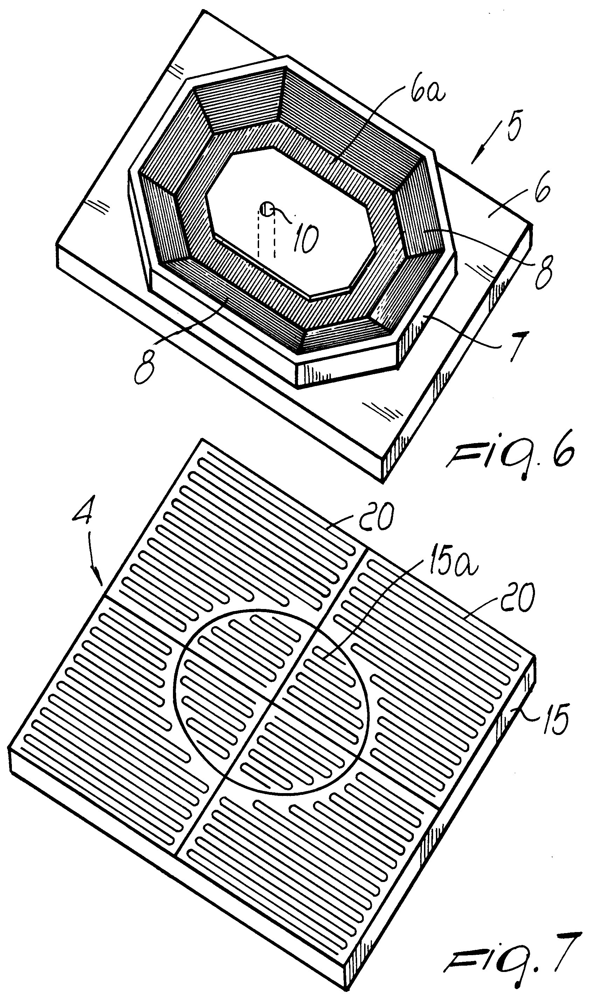

figure 6 is a perspective view of the flat fixture of the supporting element;

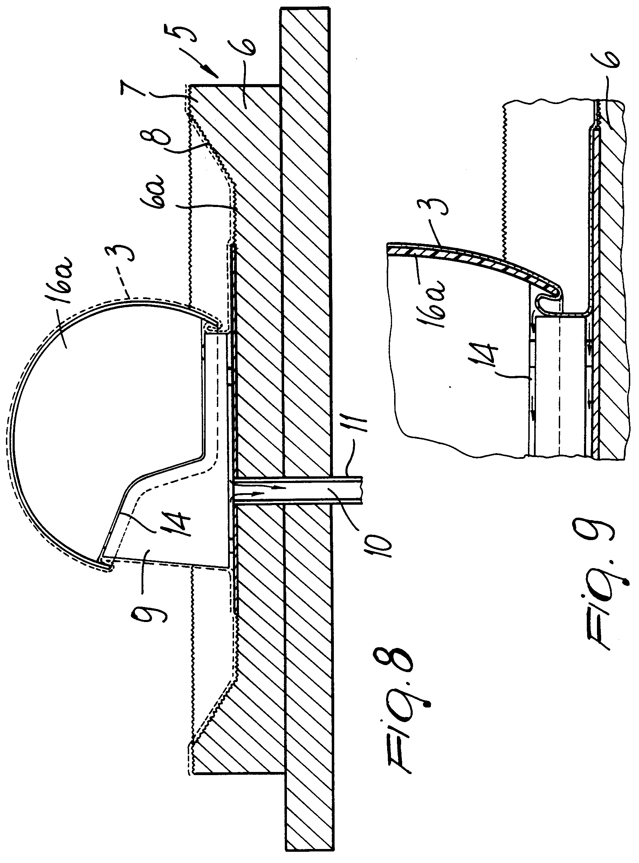

figure 7 is a schematic perspective view of the heating means;
figure 8 is a vertical sectional view of a different embodiment of the supporting element;
figure 9 is an enlarged-scale view of a detail of figure 8.

With reference to the above figures, the apparatus according to the invention, generally designated by the reference numeral 1, comprises in a per se known manner, for example as disclosed and illustrated in the above mentioned international patent WO 93/21014, a frame 2 for supporting a sheet 3 made of synthetic material which is pre-decorated on at least one of its sides, means 4 for heating the sheet 3, and a supporting structure 5 for the helmet 16 to be decorated, which is placed on the supporting structure 5 so that its top is directed toward the pre-decorated sheet 3 facing the supporting element 5 in an upward region.

The supporting structure 5 is movable, by virtue of the action of known means which are not illustrated for the sake of simplicity, toward and away from the overlying frame 2 to move the helmet 16 against the sheet 3.

According to the invention, the supporting element 5 comprises a flat fixture 6 that forms, substantially centrally with respect to its bottom 6a, a helmet supporting region which is surrounded by a rim 7 protruding toward the sheet 3 supported by the frame 2. Said rim 7 is joined to the bottom 6a of the flat fixture 6 by a sloping surface 8, and at least the top of the rim 7 and the sloping surface 8 have a wrinkled surface.

Preferably, the wrinkled surface covers not only the top of the rim 7 and the sloping surface 8 but also the bottom 6a of the flat fixture 6.

A supporting element 9 is arranged at the center of the flat fixture 6 and protrudes from said fixture toward the overlying sheet 3, the helmet 16 being fitted thereon. The region of the flat fixture 6, on which the supporting element 9 is located, is crossed by a passage 10 connected to a duct 11 that can be connected by control to a vacuum source, such as for example a tank the interior whereof is kept at a pressure substantially comprised between 0 and 0.2 bar.

Spacers 12 are interposed between the supporting element 9 and the bottom 6a of the flat fixture 6 so that a slit 13 is formed at the base of the supporting element 9, connecting the passage 10 to the space which is enclosed between the sheet 3 and the flat fixture 6 when said fixture 6 is moved toward the frame 2.

Conveniently, slits 14 are formed in the region of the supporting element 9 to be accommodated inside the helmet and located proximate to openings in the helmet, such as for example the visor port or the opening located at the base of the helmet; these slits 14 are also connected, by means of appropriate ducts formed inside the supporting element 9, to the passage 10 so that when said passage 10 is connected to the vacuum source there is a suction effect through these slits 14 as well, as shown particularly in figures 8 and 9, where the helmet has been designated by the reference numeral 16a.

Advantageously, the rim 7 protrudes from the bottom 6a of the flat fixture 6 by an amount substantially comprised between 1/5 and 1/4 of the height of the top of the helmet 16 placed on the supporting element 9, measured from the bottom 6a of the flat fixture.

Furthermore, the inclination of the surface 8 with respect to the bottom 6a of the flat fixture 6 is preferably comprised between 30° and 60°.

The means 4 for heating the sheet 3 are preferably constituted by a plate 15 arranged above the frame 2 and movable by control, with known means not shown for the sake of simplicity, so that it can be moved away from the space occupied by the frame 2 when the fixture 6 is raised to move the helmet 16 into contact with the sheet 3.

Said plate 15 is divided into a central region 15a, having a substantially elliptical shape that approximately matches the projection of the helmet 16 onto said plate 15, and into a peripheral region surrounding the central region 15a. Both the central region 15a and the peripheral region 15b are divided into four parts by the axes and associated extensions of the ellipse of the central region 15a, and an electric heating resistor 20 is arranged in each one of these eight regions; each resistor can be activated independently of the other resistors located in the plate 15, so as to scale the heating of the sheet 3 according to the requirements.

The process for decorating helmets by covering them with a pre-decorated sheet of synthetic material by using the apparatus according to the invention is as follows.

First of all, a transparent or translucent sheet of thermoformable synthetic material, such as for example a sheet of polymethyl methacrylate, or polythene, or polypropylene, or polystyrene, ABS, polyvinyl, polycarbonate or other known thermoformable materials, is prepared; a decoration is formed on said sheet by silkscreen printing with inks suitable for thermoforming, also of a known type. The decoration is performed in the region of the sheet which makes contact with the helmet 16 and occupies a surface which is substantially equal to the surface of the projection of the helmet 16, 16a on the sheet 3 with an increase that varies from 10 to 30% and is preferably 20%.

The sheet 3 is decorated on the side directed toward the helmet 16 and is locked peripherally by the frame 2. Then the sheet 3 is heated by the plate 15 to a temperature which is preferably comprised between 120 °C and 220 °C so as to bring the sheet to a plastic condition.

At this point the plate 15 is spaced from the frame 2 whereas the flat fixture 6, on which the helmet 16, 16a has been appropriately located, is raised toward the sheet 3 until the helmet 16 makes contact against the sheet 3 so as to stretch said sheet 3. When the frame 6 is in this position, the rim 7 is in contact with the sheet 3 and the duct 11 is connected to the vacuum source. Due to the vacuum that forms in the space delimited by the sheet 3 and by the flat fixture 6, the pressure differential between the side of the sheet directed toward the helmet and its outer side pushes said sheet so that it adheres to the entire surface of the helmet, thus covering it. In practice, the sheet 3 is thus thermoformed directly on the helmet 16, 16a, covering it completely. It should be noted that the suction effect at the slits 14, as shown particularly in figures 8 and 9, partially draws the sheet 3 toward the inside of the helmet at the edges of the openings formed in the helmet.

After a time interval required to stabilize the sheet 3 by cooling, the sheet 3 is released from the frame 2 and removed together with the helmet 16, 16a from the apparatus according to the present invention. Then the sheet 3 is trimmed at the helmet, which is thus decorated with a decoration that is enclosed between the sheet 3 and the body of the helmet and is thus protected against any impacts or scratches that might damage it.

It should be noted that the presence of a raised rim with a wrinkled surface in the region that makes contact with the sheet 3 during the vacuum forming step brakes the sheet 3 as it moves toward the helmet, thus stretching said sheet 3 during this step so as to effectively avoid the forming of wrinkles even on helmet parts having a complex shape and/or located in a region of the helmet that has a significant reduction in diameter, such as for example the regions located proximate to the base of the helmet.

In practice it has been observed that the apparatus according to the present invention fully achieves the intended aim and objects, since it allows to obtain helmets which are decorated by fully covering them with a sheet of transparent or translucent material which is pre-decorated and thermoformed directly on the helmet, with an excellent degree of finishing of the outer surface, which is fully wrinkle-free even for helmets with a complex profile or with a significant reduction in their diameter proximate to their base.

Another advantage arising from the possibility to fold the covering sheet at the edges of openings formed in the helmet body is that a better anchoring of the covering sheet to the helmet body is achieved, eliminating the need for subsequent finishing operations.

In practice, the materials employed, so long as they are compatible with the specific use, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. Apparatus for decorating helmets (16, 16a) by covering them with a sheet (3) of pre-decorated, transparent or translucent, thermoformable synthetic material, comprising: a frame (2) for supporting the sheet of synthetic material which is pre-decorated on at least one of its sides; means (4) for heating said sheet; and a structure (5) for supporting the helmet (16, 16a) to be decorated so that its top is directed toward said sheet (3), said supporting structure (5) facing said sheet (3) and being movable by control toward said frame (2) or away therefrom to move the helmet (16, 16a) against said sheet (3), said supporting structure (5) comprising a flat fixture (6), that forms, in a substantially central region, a helmet supporting region, and at least one passage (10) formed in said flat fixture (6) and connectable to a vacuum source; characterised in that said helmet supporting region is surrounded by a rim (7) protruding toward said sheet (3), said rim (7) being joined to the bottom (6a) of said flat fixture (6) by a surface (8) sloping downwardly toward said helmet supporting region, whereby at least the top of said rim (7) and said sloping surface (8) have a wrinkled surface, said passage (10) being connectable to said source of vacuum after engagement of said raised rim (7) with said sheet (3) to cover the helmet (16, 16a) by means of the thermoforming of said sheet (3) directly on the helmet (16, 16a).

2. Apparatus according to claim 1, characterized in that said wrinkled surface also afts the bottom of said flat fixture (6).

3. Apparatus according to claim 1, characterized in that a supporting element (9) is arranged above said flat fixture (6) at said supporting region, protrudes from said fixture (6) toward said sheet (3), and can engage the inner surface of the helmet (16, 16a).

4. Apparatus according to claim 3, characterized in that said passage (10) is formed on the bottom of said flat fixture (6) below said supporting element (9), a slit (13) being formed between the base of said supporting element (9) and the bottom (6a) of said flat fixture (6) to connect the space enclosed by said sheet (3) and by said flat fixture (6) to said passage (10).

5. Apparatus according to claim 3, characterized in that slits (14) are formed in the region of said supporting element (9) to be accommodated inside the helmet (16, 16a) and is located proximate to openings of the helmet (16, 16a), said slits (14) being connected to said passage (10) to substantially completely cover the edge of said openings with said sheet (3) during its thermoforming on said helmet (16, 16a).

6. Apparatus according to claim 3, characterized in that said rim (7) protrudes from the bottom (6a) of said fixture (6) by an amount that is substantially comprised between 1/5 and 1/4 of the height of the top of the helmet (16 placed on said supporting element (9), measured from the bottom of said flat fixture (6).

7. Apparatus according to one or more of the preceding claims, characterized in that said sloping surface (8) has, with respect to the bottom (6a) of said flat fixture (6), an inclination that is substantially comprised between 30° and 60°.

8. Process for decorating helmets (16, 16a) by covering them with a sheet (3) of pre-decorated synthetic material, comprising the following steps:
- placing the helmet (16, 16a) to be decorated on a flat supporting fixture (6) substantially at the center of a region surrounded by a rim (7) which is raised with respect to the bottom (6a) of said fixture (6), said rim (7) sloping downwardly toward said region with an inclined surface (8), said inclined surface (8) and the top of said rim (7) having a wrinkled surface;
- heating a sheet (3) of transparent or translucent, thermoformable synthetic material that faces said helmet (16, 16a) and is pre-decorated at least on the side facing said helmet (16, 16a);
- moving said flat fixture (6) with respect to said sheet (3), pushing said helmet (16, 16a) against said sheet (3), to engage said rim (7) with said sheet (3); and
- connecting the space delimited by said sheet (3) and by said flat fixture (6) to a vacuum source for the direct thermoforming of said sheet (3) on said helmet (16, 16a).

9. Process according to claim 8, characterized in that the vacuum produced by said vacuum source in the space delimited by said sheet (3) and by said flat fixture (6) is substantially comprised between 0 and 0.2 bar.

10. Process according claim 8, characterized in that the decorated region of said sheet (3) occupies a surface which is equal to the surface of the projection of said helmet (16, 16a) on said sheet (3) increased by an amount substantially comprised between 10% and 30%.

11. Process according to claim 8, characterized in that the decorated region of said sheet (3) occupies a surface which is equal to the surface of the projection of said helmet (16, 16a) on said sheet increased substantially by 20%.

12. Process according to claim 8, 9, 10 or 11, characterized in that said sheet (3) is heated to a temperature which is substantially comprised between 120 °C and 220 °C.

## Patentansprüche

1. Vorrichtung zum Verzieren von Helmen (16, 16a) durch Aufbringen einer Folie (3) aus vorher verziertem, transparentem oder durchscheinendem, warm formbaren synthetischen Material, umfassend:
einen Rahmen (2) zum Halten der Folie aus synthetischem Material, das auf zumindest einer Seite vorher verziert wurde; eine Einrichtung (4) zum Erwärmen der Folie und eine Struktur (5) zum Halten des zu verzierenden Helmes (16, 16a), so daß sein oberer Teil auf die Folie (3) gerichtet ist, wobei die Halterungsstruktur (5) der Folie (3) gegenüberliegt und durch Steuerung zu dem Rahmen (2) hin oder von ihm weg bewegbar ist, um den Helm (16, 16a) gegen die Folie (3) zu bewegen, wobei die Halterungsstruktur (5) eine flache Grundplatte (6) enthält, die in einem im wesentlichen zentralen Bereich einen Helmhaltebereich bildet, und zumindest einen Kanal (10) in der flachen Grundplatte (6), der mit einer Vakuumquelle verbunden werden kann; dadurch **gekennzeichnet**, daß der Helmhaltebereich von einem Rand (7) umgeben ist, der in Richtung der Folie (3) hervorsteht und mit dem Boden (6a) der flachen Grundplatte (6) über eine nach unten zu dem Helmhaltebereich geneigte Fläche (8) verbunden ist, daß zumindest der obere Teil des Randes (7) und die geneigte Fläche (8) eine geriffelte Oberfläche haben, und daß der Kanal (10) mit der Vakuumquelle nach Eingriff des hochstehenden Randes (7) mit der Folie (3) verbunden werden kann, um den Helm (16, 16a) durch Wärmeformung der Folie (3) direkt an dem Helm (16, 16a) zu bedecken.

2. Vorrichtung nach Anspruch 1, dadurch **gekennzeichnet**, daß die geriffelte Oberfläche auch am Boden der flachen Grundplatte (6) vorhanden ist.

3. Vorrichtung nach Anspruch 1, dadurch **gekennzeichnet**, daß ein Halteelement (9) über der flachen Grundplatte (6) an dem Haltebereich angeordnet ist, von der Grundplatte (6) in Richtung zur Folie (3) vorsteht und mit der Innenfläche des Helmes (16, 16a) in Kontakt gebracht werden kann.

4. Vorrichtung nach Anspruch 3, dadurch **gekennzeichnet**, daß der Kanal (10) am Boden der flachen Grundplatte (6) unter dem Halteelement (9) geformt ist, und daß ein Schlitz (13) zwischen der Basis des Halteelements (9) und dem Boden (6) der flachen Grundplatte (6a) geformt ist zum Verbinden des Raums, der durch die Folie (3) und die flache Grundplatte (6) eingeschlossen ist, mit dem Kanal (10).

5. Vorrichtung nach Anspruch 3, dadurch **gekennzeichnet**, daß Schlitze (14) in dem Bereich des Halteelements (9) geformt sind, der in das Innere des Helmes (16, 16a) einzuführen und nahe den Öffnungen des Helmes (16, 16a) angeordnet ist, und daß die Schlitze (14) mit dem Kanal (10) verbunden sind, um die Kante der Öffnungen mit der Folie (3) während ihrer Wärmeformung an dem Helm (16, 16a) praktisch vollständig zu bedecken.

6. Vorrichtung nach Anspruch 3, dadurch **gekennzeichnet**, daß der Rand (7) von dem Boden (6a) der Grundplatte (6) um einen Betrag vorsteht, der im wesentlichen 1/5 bis 1/4 der Höhe des oberen Teils des auf das Halteelement (9) aufgesetzten Helmes (16), gemessen von dem Boden der flachen Grundplatte (6), entspricht.

7. Vorrichtung nach einem oder mehreren der vorhergehenden Ansprüche, dadurch **gekennzeichnet**, daß die geneigte Fläche (8) gegenüber dem Boden (6a) der flachen Grundplatte (6) eine Neigung zwischen 30° und 60° hat.

8. Verfahren zum Verzieren von Helmen (16, 16a) durch Aufbringen einer Folie aus vorher verziertem, synthetischen Material, mit den folgenden Schritten:
- Plazieren des zu verzierenden Helmes (16, 16a) auf einer flachen tragenden Grundplatte (6) im wesentlichen in der Mitte eines Bereiches, der von einem Rand (7) umgeben ist, welcher gegenüber dem Boden (6a) der Grundplatte (6) erhöht ist und nach unten zu dem Bereich hin eine geneigte Fläche (8) hat, die wie der obere Teil des Randes (7) eine geriffelte Oberfläche hat;
- Erwärmen einer Folie (3) aus transparentem oder durchscheinendem, warm formbaren synthetischen Material, die dem Helm (16, 16a) gegenüberliegt und zumindest auf der dem Helm (16, 16a) zugewandten Seite, vorher verziert wurde;
- Bewegen der flachen Grundplatte (6) relativ zu der Folie (3), Drücken des Helmes (16, 16a) gegen die Folie (3), um den Rand (7) mit der Folie (3) in Kontakt zu bringen; und
- Verbinden des durch die Folie (3) und die flache Grundplatte (6) eingeschlossenen Raumes mit einer vakuumquelle zur direkten Wärmeformung der Folie (3) an dem Helm (16, 16a).

9. Verfahren nach Anspruch 8, dadurch **gekennzeichnet**, daß das durch die Vakuumquelle erzeugte Vakuum in dem durch die Folie (3) und die flache Grundplatte (6) eingeschlossenen Raum einen Druckwert im wesentlichen zwischen 0 und 0,2 bar hat.

10. Verfahren nach Anspruch 8, dadurch **gekennzeichnet**, daß der verzierte Bereich der Folie (3) eine Fläche bedeckt, die der um einen Betrag zwischen 10% und 30% vergrößerten Projektionsfläche des Helmes (16, 16a) auf der Folie (3) entspricht.

11. Verfahren nach Anspruch 8, dadurch **gekennzeichnet**, daß der verzierte Bereich der Folie (3) eine Fläche bedeckt, die der um etwa 20% erhöhten Projektionsfläche des Helmes (16, 16a) auf der Folie entspricht.

12. Verfahren nach einem der Ansprüche 8, 9, 10 oder 11, dadurch **gekennzeichnet**, daß die Folie (3) auf eine Temperatur erwärmt wird, die zwischen etwa 120° und etwa 220° C liegt.

## Revendications

1. Dispositif pour décorer des casques (16, 16a) en les recouvrant d'une feuille (3) constituée d'un matériau synthétique thermoformable, transparent ou translucide, prédécorée comportant : un cadre (2) pour supporter la feuille de matériau synthétique qui est prédécorée sur au moins un de ses côtés ; des moyens (4) pour chauffer ladite feuille ; et une structure (5) pour supporter le casque (16, 16a) destiné à être décoré de sorte que sa partie supérieure soit dirigée vers ladite feuille (3), ladite structure de support (5) étant située en vis-à-vis de ladite feuille (3) et pouvant se déplacer sur commande vers ledit cadre (2), ou en s'éloignant de celui-ci, pour déplacer le casque (16, 16a) à l'encontre de ladite feuille (3), ladite structure de support (5) comportant un support plat (6), qui forme, dans une zone à peu près centrale, une zone de support de casque, et au moins un passage (10) formé dans ledit support plat (6) et pouvant être relié à une source de vide, caractérisé en ce que ladite zone de support de casque est entourée par une nervure (7) faisant saillie vers ladite feuille (3), ladite nervure (7) étant reliée à la partie inférieure (6a) du support plat (6) par une surface (8) en pente vers le bas en direction de ladite zone de support de casque, au moins la partie supérieure de ladite nervure (7) et de ladite surface en pente (8) étant une surface ridée, ledit passage (10) pouvant être relié à ladite source de vide après mise en contact de ladite nervure en saillie (7) avec ladite feuille (3) pour recouvrir le casque (16, 16a) par l'intermédiaire du thermoformage de ladite feuille (3) directement sur le casque (16, 16a).

2. Dispositif selon la revendication 1, caractérisé en ce que ladite surface ridée est aussi agencée au niveau du fond dudit support plat (6).

3. Dispositif selon la revendication 1, caractérisé en ce qu'un élément de support (9) est agencé au-dessus dudit support plat (6) au niveau de ladite zone de support, et fait saillie à partir dudit support (6) en direction de ladite feuille (3), et peut venir en contact avec la surface intérieure du casque (16, 16a).

4. Dispositif selon la revendication 3, caractérisé en ce que ledit passage (10) est formé sur le fond dudit support plat (6) en-dessous dudit élément de support (9), une fente (18) étant formée entre la base dudit élément de support (9) et le fond (6a) du support plat (6) pour relier audit passage (10) l'espace enfermé par ladite feuille (8) et par ledit support plat (6).

5. Dispositif selon la revendication 3, caractérisé en ce que des fentes (14) sont formées dans la zone dudit élément de support (9) pour être reçues à l'intérieur du casque (16, 16a) et sont positionnées à proximité des ouvertures du casque (16, 16a), lesdites fentes (14) étant reliées audit passage (10) pour recouvrir pratiquement complètement le bord desdites ouvertures par ladite feuille (3) pendant son thermoformage sur ledit casque (16, 16a).

6. Dispositif selon la revendication 3, caractérisé en ce que ladite nervure (7) fait saillie à partir du fond (6a) dudit support (6) d'une quantité qui est pratiquement comprise entre 1/5 et 1/4 de la hauteur de la partie supérieure du casque (16) placé sur ledit élément de support (9) mesurée à partir du fond dudit support plat (6).

7. Dispositif selon l'une quelconque des revendications précédentes, caractérisé en ce que ladite surface en pente (8) a, par rapport au fond (6a) dudit support plat (6), une inclinaison qui est pratiquement comprise entre 30° et 60°.

8. Procédé de décoration de casques (16, 16a) en les recouvrant d'une feuille (3) constituée d'un matériau synthétique, prédécorée, comportant les étapes consistant à :
- placer le casque (16, 16a) à décorer sur un support plat (6) à peu près au niveau du centre d'une zone entourée par une nervure (7) qui est surélevée par rapport au fond (6a) dudit support (6), ladite nervure (7) étant inclinée vers le bas en direction de ladite zone par l'intermédiaire d'une surface inclinée (8), ladite surface inclinée (8) et la partie supérieure de ladite nervure (7) ayant une surface ridée ;
- chauffer une feuille (3) constituée d'un matériau synthétique thermoformable, transparent ou translucide qui est située en vis-à-vis dudit casque (16, 16a) et est prédécorée au moins sur le côté situé en vis-à-vis dudit casque (16, 16a),
- déplacer ledit support plat (6) par rapport à ladite feuille (3), pousser ledit casque (16, 16a) à l'encontre de ladite feuille (3), pour mettre en contact ladite nervure (7) avec ladite feuille (3) ; et
- relier l'espace délimité par ladite feuille (3) et par ledit support plat (6) à une source de vide pour le thermoformage direct de ladite feuille (3) sur ledit casque (16, 16a).

9. Procédé selon la revendication 8, caractérisé en ce que le vide produit par la source de vide dans l'espace délimité par ladite feuille (3) et par ledit support plat (6) est pratiquement compris entre 0 et 0,2 bars.

10. Procédé selon la revendication 8, caractérisé en ce que la zone décorée de ladite feuille (3) occupe une surface qui est égale à la surface de la saillie dudit casque (16, 16a) sur ladite feuille (3) augmentée d'une quantité pratiquement comprise entre 10% et 30%.

11. Procédé selon la revendication 8, caractérisé en ce que la zone décorée de ladite feuille (3) occupe une surface qui est égale à la surface de la saillie dudit casque (16, 16a) sur ladite feuille augmentée pratiquement de 20%.

12. Procédé selon les revendications 8, 9, 10 ou 11, caractérisé en ce que ladite feuille (3) est chauffée à une température qui est pratiquement comprise entre 120° C et 220° C.
